# EUROPEAN PATENT SPECIFICATION

(11) **EP 3 738 766 B1**
(45) Date of publication and mention of the grant of the patent: **18.11.2026**
(21) Application number: 19738582.6
(22) Date of filing: 11.01.2019
(51) Int. Cl.: C08J 7/04, C09J 7/29, C08K 3/22

(54) **ELECTROMAGNETIC WAVE TRANSMISSIVE METALLIC LUSTER FILM**
ELEKTROMAGNETISCHE WELLEN DURCHLASSENDE METALLISCHE GLANZFOLIE
FILM DE LUSTRE MÉTALLIQUE TRANSMETTANT LES ONDES ÉLECTROMAGNÉTIQUES

(30) Priority: 12.01.2018 JP 2018003790; 23.04.2018 JP 2018082506
(43) Date of publication of application: 18.11.2020
(73) Proprietor: NITTO DENKO CORPORATION, Ibaraki-shi Osaka 567-8680 (JP)
(72) Inventor: NAKAI, Takahiro, Ibaraki-shi, Osaka 567-8680 (JP); CHEN, Xiaolei, Ibaraki-shi, Osaka 567-8680 (JP); MACHINAGA, Hironobu, Ibaraki-shi, Osaka 567-8680 (JP)
(74) Representative: Gill Jennings & Every LLP
(86) International application number: PCT/JP2019/000799
(87) International publication number: WO 2019/139154

(56) References cited:
- WO-A1-2007/020861
- WO-A1-2014/126135
- WO-A1-2015/025963
- WO-A1-2016/125823
- WO-A1-2016/125823
- JP-A- 2003 252 137
- JP-A- 2006 264 315
- JP-A- 2006 281 591
- JP-A- 2007 144 988
- JP-A- 2009 066 996
- JP-A- 2009 090 507
- JP-A- 2010 251 899
- US-A1- 2007 098 967

## Description

### TECHNICAL FIELD

The present invention relates to an electromagnetic wave transmissive metallic luster film.

### BACKGROUND ART

A decorative film having electromagnetic wave transmitting property and metallic luster, in which a substrate film, a metal layer, and an adhesive layer are laminated, is conventionally known.

Such a film has both high-quality feeling of appearance originated from its metallic luster and electromagnetic wave transmitting property, and is therefore suitably used in decoration of an instrument sending and receiving radio waves. For example, such film is used in a casing of mobile phones, smart phone, and computers, and declaration of a front part of automobiles. Furthermore, in recent years, with the development of IoT technologies, household electric appliances, and living equipment have communication facility, and such film is expected to be applied to wider fields.

For example, Patent Literature 1 discloses a metallic luster non-conductive transfer film including a protective layer, a printed layer laminated on the protective layer, a non-conductive metal deposited layer deposited in an island structure on the printed layer and an adhesive layer laminated on the metal deposited layer, as a transfer film that is transferred to an injection-molded product. Patent Literature 2 discloses a heat shielding film characterized by having a metal layering part comprising at least one metal layer and at least one metal oxide layer on at least one surface of a substrate film, the metal layering part being divided into a plurality of island parts by lattice-shaped cracks, the average size of the island parts calculated by a 10-point averaging method being 30-500 µm, the haze being 5% or less, and the electromagnetic-wave shielding rate being 10 dB or less. Patent Literature 3 discloses a heat ray shielding material that is provided with bases and a metal layer. This heat ray shielding material is characterized in that: the metal layer is formed by arranging a plurality of island-like metal coating films; each metal coating film has a diameter of 0.05-0.50 mm; the distance between any two metal coating films is 0.02-0.23 mm; the area ratio of the portions that are not covered by the metal coating films is 11-80%; the visible light transmittance thereof is 45% or more; and the electromagnetic wave shielding ratio thereof is 10 dB or less.

### CITATION LIST

### PATENT LITERATURE

Patent Literature 1: JP-T-2014-509268 (the "JP-T" as used herein means a published Japanese translation of a PCT patent application)
Patent Literature 2: WO 2016/125823 A1
Patent Literature 3: WO 2015/025963 A1

### SUMMARY OF INVENTION

### TECHNICAL PROBLEM

Such a film is generally used by adhering to a surface on a visually recognized side of an adherend, that is, an outside surface, and therefore, the film is present on the outermost surface in a product obtained by adhering the film to the adherend.

A protective layer is generally provided on the outermost surface of a film for the improvement of scratch resistance, but scratch resistance was not yet sufficient.

In a film having metallic luster, the high-quality feeling of appearance is sometimes greatly impaired by slight scratches formed on the surface of the film. Therefore, a further scratch-resistance film is desired. In particular, for example in the case where a film is applied to products frequently contacting with the outside, such as mobile phones and smart phones, this demand is remarkable.

Furthermore, needs to texture of products become diverse, and there are needs of utilizing the original texture of an adherend in products. However, the conventional films present on the outermost surface of products could not answer the needs.

The present invention has been completed in view of the above, and an object of the present invention is to provide a film that has metallic luster and electromagnetic wave transmitting property, can be used in scratch-resistant situations and can utilize the original texture of an adherend during use of products.

### SOLUTION TO PROBLEM

As a result of extensive and intensive investigations, the present inventors have found that in an electromagnetic wave transmissive metallic luster film having a discontinuous metal layer, the above problem can be solved by forming an adhesive layer containing a transparent adhesive on the metal layer.

Specifically, the electromagnetic wave transmissive metallic luster film of the present invention is according to claim 1.

In one embodiment of the electromagnetic wave transmissive metallic luster film of the present invention, the transparent adhesive may be colored.

In one embodiment of the electromagnetic wave transmissive metallic luster film of the present invention, the metal layer may have an island structure.

In one embodiment of the electromagnetic wave transmissive metallic luster film of the present invention, the metal layer may contain aluminum or an aluminum alloy.

In one embodiment of the electromagnetic wave transmissive metallic luster film of the present invention, the aluminum alloy may contain aluminum in an amount of 50 wt% or more.

One embodiment of the electromagnetic wave transmissive metallic luster film of the present invention may include a light-shielding layer formed on a surface of the substrate film that is opposite the surface thereof on which the metal layer is formed.

In one embodiment of the electromagnetic wave transmissive metallic luster film of the present invention, the substrate film may have light-shielding property.

An use of the electromagnetic wave transmissive metallic luster film of the present invention includes adhering it, via the adhesive layer, to a surface of a transparent member that is opposite its visually recognised surface.

A casing of the present invention includes a transparent casing substrate and the electromagnetic wave transmissive metallic luster film of the present invention, wherein the electromagnetic wave transmissive metallic luster film is adhered, via the adhesive layer, to a surface of the transparent casing substrate that is opposite a visually recognized surface thereof.

An electronic device of the present invention includes the casing of the present invention.

### ADVANTAGEOUS EFFECTS OF INVENTION

The electromagnetic wave transmissive metallic luster film of the present invention has metallic luster and electromagnetic wave transmitting property, can use in scratch-resistant situations and can utilize the original texture of an adherend during use of a product.

### BRIEF DESCRIPTION OF DRAWINGS

FIG. 1 is a schematic cross-sectional view of an electromagnetic wave transmissive metallic luster film (not according to the present invention).
FIG. 2 is a schematic cross-sectional view of the state of an electromagnetic wave transmissive metallic luster film (not according to the present invention), adhered to an adherend.
FIG. 3 is SEM image of a metal layer in one embodiment of the present invention.
FIG. 4 is TEM image of a cross-section of a metal layer in one embodiment of the present invention.
FIG. 5 is a view showing measurement points of a thickness of the metal layer in the examples.

### DESCRIPTION OF EMBODIMENTS

Embodiments for carrying out the present invention are described in detail below.

### [Structure of electromagnetic wave transmissive metallic luster film]

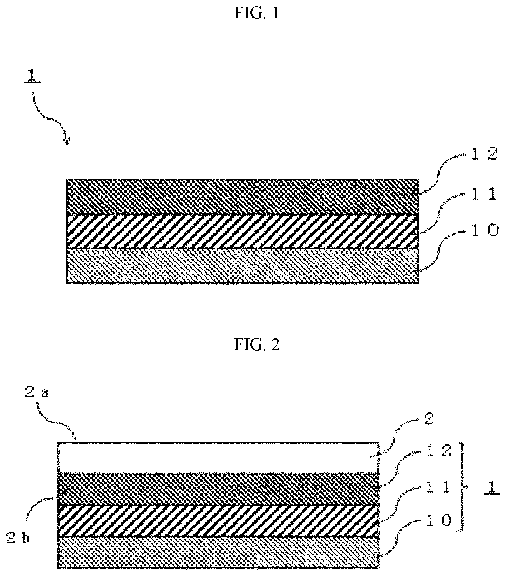

Schematic cross-sectional view of the electromagnetic wave transmissive metallic luster film (hereinafter simply referred to as a "metallic luster film") 1 is shown in FIG. 1. The metallic luster film 1 of this embodiment includes a substrate film 10, a metal layer 11 which is formed on the substrate film 10 and is a discontinuous layer containing a metal, and an adhesive layer 12 which is formed on the metal layer 11 and is a layer containing a transparent adhesive.

FIG. 2 is a schematic cross-sectional view of the state that the metallic luster film 1 is adhered to an adherend 2. Since the metallic luster film 1 of this embodiment has the above configuration, even in the case where the film is used by adhering to a surface 2b on the side (hereinafter sometimes referred to as "inside") opposite a surface 2a of the visually recognized side (hereinafter sometimes referred to as "outside") of a transparent adherend 2 via the adhesive layer 12, the metal layer 11 can be visually recognized through the adherend 2 and the adhesive layer 12. In other words, the metallic luster film 1 can decorate the transparent adherend 2 from the inside.

By adhering the metallic luster film 1 to the inside of the adherend 2, the film is not brought into contact with the outside of a product that is obtained by adhering the metallic luster film 1 of this embodiment to the adherend 2 and is thus scratch-resistant. Additionally, the film can decorate the adherend 2 while utilizing the original texture of the adherend 2.

### <Substrate film>

The substrate film 10 that can be used includes films including a homopolymer or a copolymer such as polyethylene terephthalate (PET), polyethylene naphthalate (PEN), polybutylene terephthalate, polyamide, polyvinyl chloride, polycarbonate (PC), cycloolefin polymer (COP), polystyrene, polypropylene (PP), polyethylene, polycycloolefin, polyurethane, poly(methyl methacrylate) (PMMA) and acrylonitrile butadiene styrene (ABS). Those members do not affect brilliancy and electromagnetic wave transmitting property. However, to form the metal layer 11 later, the substrate film 10 is preferably films that can withstand high temperature such as deposition or sputtering. Therefore, of the above materials, polyethylene terephthalate, polyethylene naphthalate, acryl, polycarbonate, cycloolefin polymer, ABS, polypropylene and polyurethane are preferred. Above all, polyethylene terephthalate, cycloolefin polymer, polycarbonate and acryl are preferred from good balance between heat resistance and costs. The substrate film 10 may be a single layer film and may be a laminate film. The thickness of the substrate film 10 is preferably, for example, about 6 µm to 250 µm from easy processing. Furthermore, plasma treatment, or easy adhesion processing may be applied to the substrate film 10 in order to increase adhesion to the metal layer and an indium oxide-containing layer described hereinafter. Furthermore, the substrate film 10 may have a light-shielding property, although the detail is described hereinafter.

### <Metal layer>

The metal layer 11 is a discontinuous layer containing a metal, which is formed on the substrate film 10.

The metal constituting the metal layer 11 in this embodiment is not particularly limited. For example, at least one metal selected from aluminum (Al), zinc (Zn), lead (Pb), copper (Cu) and silver (Ag), and an alloy containing the metal as a main component can be used.

The metallic luster film 1 of this embodiment has metallic luster due to the metal layer 11 and can impart an appearance of high-quality feeling to the adherend. A metal having high reflectance in a visible light region is preferably used in the metal constituting the metal layer 11 from the standpoint of the improvement of the high-quality feeling, and aluminum or an aluminum alloy is preferably used from this standpoint. In the case of using an aluminum alloy, the content of aluminum is preferably 50 wt% or more.

The metal layer 11 in this embodiment only needs to have a discontinuous structure having metal parts 11a and a gap 11b, and has, for example, an island structure or a crack structure described hereinafter. The metallic luster film 1 of this embodiment has electromagnetic wave transmitting property due to the presence of the gap 11b in the metal layer 11. As a result, the metallic luster film 1 of this embodiment can be suitably used in the decoration of a device sending and receiving radio wave, such as mobile phones or smart phones.

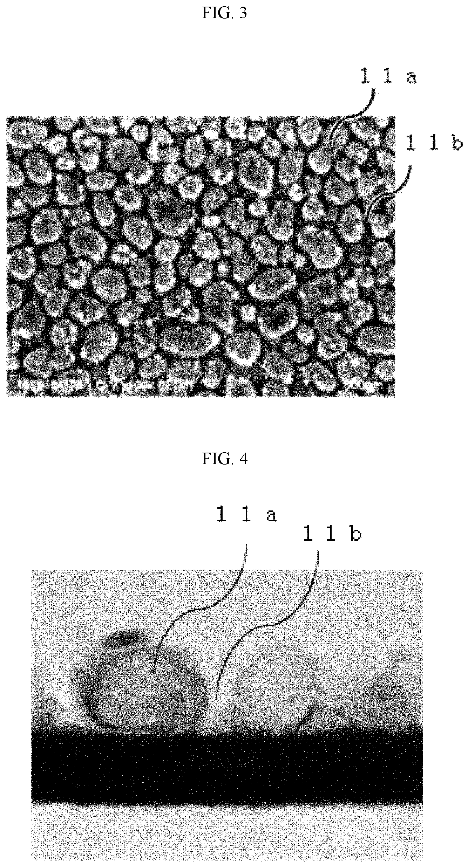

The island structure is a structure in which metal particles are independent to each other, are slightly separated from each other or are laid in the state of partially contacting with each other. SEM image of the metal layer 11 having an island structure in one embodiment of the present invention is shown in FIG. 3. Furthermore, TEM image of a cross-sectional view of the metal layer 11 having an island structure in one embodiment of the present invention is shown in FIG. 4.

The metal layer 11 having an island structure can be formed by, for example, depositing or sputtering a metal on the substrate film 10. In this case, when an indium oxide-containing layer is previously provided on the substrate film 10, the metal layer 11 having an island structure can be easily obtained and this is preferred. The detail of the indium oxide-containing layer is described hereinafter.

The thickness of the metal layer 11 having an island structure is not particularly limited, but is preferably 20 nm or more and more preferably 30 nm or more from the standpoint of the improvement of metallic luster feeling.

On the other hand, the thickness is preferably 100 nm or less and more preferably 70 nm or less from the standpoint of the improvement of electromagnetic wave transmitting property.

The thickness of the metal layer 11 in the present description means the value measured by the method described in the item of "Examples".

The equivalent circle diameter of the metal part 11a in the metal layer 11 having an island structure is not particularly limited, but is generally about 10 to 1000 nm. Furthermore, the distance between the metal parts 11a is not particularly limited, but is generally about 10 to 1000 nm.

The crack structure is a structure in which a metal thin film is divided by cracks.

The metal layer 11 of the crack structure can be formed by, for example, providing a metal thin film on the substrate film 10, and bending and stretching, thereby generating cracks in the metal thin film. In this case, the metal layer 11 having a crack structure can be easily formed by providing a brittle layer formed of a material having poor stretchability, that is, a material easily forming cracks by stretching, between the substrate film 10 and the metal thin film.

As described above, embodiments in which the metal layer 11 is discontinuous are not particularly limited, but an island structure is preferred from the standpoint of productivity.

### <Adhesive layer>

The adhesive layer 12 is a layer containing a transparent adhesive, which is formed on the metal layer 11. The metallic luster film 1 of this embodiment is used by adhering to the adherend 2 through the adhesive layer 12.

An adhesive forming the adhesive layer 12 is not particularly limited so long as it is a transparent adhesive. For example, an acrylic adhesive, a rubber adhesive, a silicone adhesive, a polyester adhesive, a urethane adhesive, an epoxy adhesive and a polyether adhesive can be used alone or as mixtures of two or more kinds. The acrylic adhesive is preferably used from the standpoints of transparency, processability, and durability.

The thickness of the adhesive layer 12 is not particularly limited. Small thickness can improve visible light transmitting property, film thickness precision and flatness. Therefore, the thickness is preferably 100 µm or less, more preferably 75 µm or less and still more preferably 50 µm or less.

The total light transmittance of the whole adhesive layer 12 is not particularly limited, but is preferably 10% or more, more preferably 30% or more and still more preferably 50% or more, as the value in optional visible light wavelength measured according to JIS K7361. Higher total light transmittance of the adhesive layer 12 is preferred.

The transparent adhesive constituting the adhesive layer 12 may be colored.

In this case, the metal layer 11 is viewed through the colored adhesive layer 12, and as a result, colored metallic luster can be expressed.

In general, in the case of expressing colored metallic luster, a layer for coloring should be provided separately, and this increases the overall thickness of the metallic luster film. However, use of the colored transparent adhesive can express colored metallic luster without involving the increase of the thickness.

The metallic luster film 1 of this embodiment is used by adhering to the inside of the adherend 2. In the case where the adherend 2 is a casing substrate of precision equipment such as mobile phones and smart phones, smaller thickness of the metallic luster film 1 is preferred in order to suppress the space in the casing from being oppressed. Therefore, in the case of expressing colored metallic luster using the metallic luster film 1 of this embodiment, colored transparent adhesive is preferably used.

A method of coloring the transparent adhesive is not particularly limited. For example, the transparent adhesive can be colored by adding a slight amount of a colorant.

A release liner is preferably provided on the adhesive layer 12 in order to protect the adhesive layer 12 until adhering to the adherend 2.

The metallic luster film 1 of the present invention may have layers other than the substrate film 10, the metal layer 11 and the adhesive layer 12 so long as the effect of the present invention is achieved. For example, the metallic luster film may have the layers exemplified below.

### <Light-shielding layer>

The metallic luster film 1 of this embodiment may have a light-shielding layer having no visible light transmitting property on the surface of the substrate film 10 that is opposite the surface thereof on which the metal layer 11 is formed. When the light-shielding layer is provided, for example, in the case where the metallic luster film 10 of this embodiment is used in decoration of a casing of electronic devices, a circuit in the casing can be prevented from being viewed through the metallic luster film 1.

Material of the light-shielding layer is not particularly limited, and for example, the materials exemplified as the materials that can be used in the substrate film 10 described before is colored in black and can be used.

Even in the metallic luster film having no light-shielding layer, the same effect as the case of having the light-shielding layer can be achieved by making the substrate film 10 light-shielding.

### <Indium oxide-containing layer>

The metallic luster film 1 of this embodiment has an indium oxide-containing layer between the substrate film 10 and the metal layer 11. The indium oxide-containing layer is formed on the substrate film 10 and the metal layer 11 is then formed thereon, the metal layer 11 having an island structure is easily formed by sputtering.

The indium oxide-containing layer may be directly provided on the surface of the substrate film 10 and may be indirectly provided on the surface of the substrate film 10 through a protective layer or the like. The indium oxide-containing layer is provided on the surface of the substrate film 10 in a continuous state, that is, without a gap. By providing the indium oxide-containing layer in a continuous state, smoothness and corrosion resistance of the indium oxide-containing layer, eventually, the metal layer 11 and the metallic luster film 1, can be improved, and furthermore, the indium oxide-containing layer is easily film-formed without in-plane fluctuation.

Indium oxide (In₂O₃) itself can be used as the indium oxide-containing layer, and, for example, a metal-containing material such as indium tin oxide (ITO) or indium zinc oxide (IZO) can be used as the indium oxide-containing layer. ITO or IZO that contains a metal other than indium is more preferably used from that discharge stability in sputtering is high.

The content of tin (Sn) to the weight of In₂O₃ in ITO is not particularly limited, but is, for example, 2.5 wt% to 30 wt% and more preferably 3 wt% to 10 wt%. The content of zinc oxide (ZnO) to the weight of In₂O₃ in IZO is, for example, 2 wt% to 20 wt%.

As described above, aluminum or an aluminum alloy is preferably used in the metal layer 11 in the metallic luster film 1 of this embodiment. However, aluminum or an aluminum alloy has been difficult to form an island structure, different from indium, and tin. In other words, when aluminum or an aluminum alloy was laminated on the substrate film 10 by sputtering, a continuous metal layer is liable to be formed.

On the other hand, a discontinuous layer of aluminum can be relatively easily obtained by forming an indium oxide-containing layer on the substrate film 10 and then laminating aluminum or an aluminum alloy thereon by sputtering.

The mechanism that the metal layer 11 having a discontinuous structure can be easily obtained by providing the indium oxide-containing layer onto the substrate film 10 is not yet clear, but it is assumed to be as follows.

In a thin film forming process of the metal layer 11, easiness of the formation of a discontinuous structure has the correlation with surface diffusion on an object member to which the metal layer 11 is given (in this embodiment, the indium oxide-containing layer formed on the substrate film 10), and a discontinuous structure is easily formed as the temperature of the object member is high, wettability of the metal layer to the object member is small and a melting point of the material of the metal layer 11 is low. In other words, the indium oxide-containing layer has small wettability to a metal as compared with the substrate film 10. Therefore, it is considered that the metal layer 11 having a discontinuous structure is easy to be formed by forming the indium oxide-containing layer on the substrate film 10.

Furthermore, regarding metals other than aluminum (Al) particularly used in the examples mentioned later, it is considered that a metal having relatively low melting point, such as zinc (Zn), lead (Pb), copper (Cu) or silver (Ag), can easily form a discontinuous structure in the same method.

The thickness of the indium oxide-containing layer is generally preferably 1000 nm or less, more preferably 50 nm or less and still more preferably 20 nm or less, from the standpoints of electromagnetic wave transmission property and productivity. On the other hand, the thickness of the indium oxide-containing layer is preferably 1 nm or more such that the metal layer 11 to be laminated becomes easy to be a discontinuous state, more preferably 2 nm or more in order to certainly become a discontinuous state and still more preferably 5 nm or more.

The ratio between the thickness of the metal layer 11 and the thickness of the indium oxide-containing layer (thickness of metal layer 11/thickness of indium oxide-containing layer) is preferably a range of 0.1 to 100 and more preferably a range of 0.3 to 35.

The indium oxide-containing layer can be formed by vacuum deposition, sputtering, or ion plating, but is preferably formed by sputtering from that the thickness can be strictly controlled even though large area.

### [Properties of metallic luster film]

Properties of the metallic luster film 1 of this embodiment are described below.

### <Sheet resistance>

The value of sheet resistance of the metallic luster film 1 of this embodiment is not particularly limited. In the case where the metallic luster sheet is used in a device sending and receiving radio wave, the film preferably has excellent electromagnetic wave transmitting property. From this standpoint, the value of sheet resistance is preferably 100 Ω/square or more and more preferably 200 Ω/square or more.

The sheet resistance value of the metallic luster film 1 can be measured by an eddy current measurement method according to JIS Z2316-1: 2014.

### <Electromagnetic wave transmission attenuation>

The value of electromagnetic wave transmission attenuation of the metallic luster film 1 of this embodiment is not particularly limited. However, in case of using the film in the decoration of a device sending and receiving radio wave, the value is preferably small. For example, microwave electric field transmission attenuation measured by the method described in the item of Examples is preferably 10 [-dB] or less and more preferably 5 [-dB] or less.

The electromagnetic wave transmitting property in microwave band (1 GHz) has the correlation with the electromagnetic wave transmitting property in frequency band (76 to 80 GHz) of millimeter wave radar, and those properties show relatively near value. Therefore, the metallic luster film having small microwave electric field transmission attenuation and excellent electromagnetic wave transmitting property in microwave band also has excellent electromagnetic wave transmitting property in frequency band of millimeter wave radar, as described above.

### <Visible light reflectance>

The visible light reflectance of the metallic luster film 1 of this embodiment is not particularly limited, but metallic luster feeling is excellent as the visible light reflectance is large. Thus, larger visible light reflectance is preferred. Therefore, in the metallic luster film of this embodiment, for example, the reflectance in a wavelength of 550 nm is preferably 20% or more, more preferably 40% or more and still more preferably 50% or more, when the reflectance of Al-deposited mirror measured according to the method described in the item of Examples is 100% as a reference.

### <Thickness>

The thickness of the metallic luster film 10 of this embodiment is not particularly limited. However, in the case where the adherend 2 is, for example, a casing of precision devices such as mobile phones or smart phones, the thickness of the metallic luster film is preferably small as described before. Therefore, the thickness of the metallic luster film 1 of this embodiment is preferably 300 µm or less, more preferably 200 µm or less and still more preferably 100 µm or less.

### <Uses of metallic luster film>

A method of adhering the metallic luster layer 1 of this embodiment to the adherend 2 is not particularly limited. For example, the film can be adhered by vacuum forming. The vacuum forming is a method of stretching a film while heating and softening, reducing a pressure in a space in the adherend side of the film, pressuring a space in the opposite side as required, and adhering and laminating while forming the film along a three-dimensional shape of the surface of the adherend.

The metallic luster film 1 of this embodiment is used by adhering to the inside surface of the transparent adherend 2. As the transparent adherend 2, a member formed of glass or plastics can be used, but is not limited to those.

The metallic luster film 1 of this embodiment has electromagnetic wave transmitting property and therefore can be suitably used in the decoration of an exterior member of a device sending and receiving radio wave. For example, a casing obtained by adhering the metallic luster film of this embodiment to the inside surface of a transparent casing substrate can be suitably used as a casing of electronic instruments such as mobile phones, smart phones and computers.

### Examples

The present invention is described below by reference to examples, but is not construed as being limited to those.

### <Production of laminate of substrate film, indium oxide-containing layer and metal layer>

ITO layer having a thickness of 5 nm was directly formed on PET film O-300E having a thickness 125 µm manufactured by Mitsubishi Chemical Corporation (hereinafter referred to as a substrate film) using DC magnetron sputtering. The temperature of the substrate film when forming the ITO film was set to 130°C. ITO contains SnO₂ in an amount of 10 wt% based on In₂O₃.

An island-shaped aluminum (Al) layer having a thickness of 50 nm was formed on the ITO layer using AC sputtering (AC: 40 kHz), thereby obtaining a laminate of the substrate film, the indium oxide-containing layer and the metal layer (Al) layer (hereinafter referred to as the laminate). The temperature of the substrate film in forming the Al layer was set to 130°C.

The thickness of the Al layer is an average value of the thickness of the metal parts 11a measured as follows, considering the variation of the thickness in the layer, in more detail, the variation of the thickness of every metal part 11a. The average value is hereinafter called "the maximum thickness" for convenience.

### (Measurement method of maximum thickness)

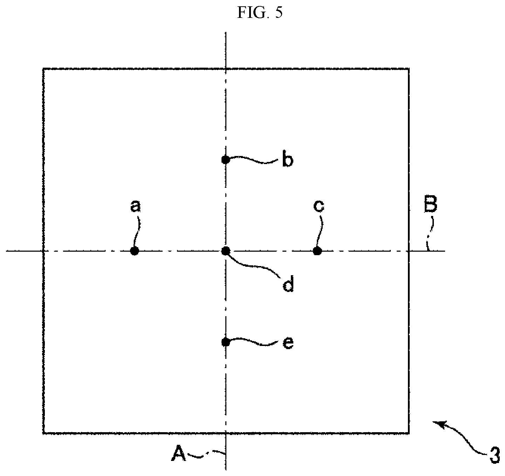

A square region 3 having one side of 5 cm as shown in FIG. 5 was appropriately extracted from the laminate, and the total points "a" to "e" obtained by dividing the respective center lines A and B of the vertical side and the horizontal side of the square region 3 into 4 equal parts were selected as the measurement points.

Cross-sectional image as shown in FIG. 4 in the respective measurement points selected was measured, and a viewing angle area containing about five metal parts 11a was extracted from the TEM image obtained. Individual thicknesses of the metal parts 11a, that is, individual thickness of about 25 (about 5 × 5) metal parts 11a, in the viewing angle area extracted in the five measurement points were obtained from the TEM image, and the average value of those was designated as the thickness of the Al layer.

The thickness of each metal part 11a was the thickness in the thickest part in a vertical direction from the ITO layer.

### <Production of colored adhesive sheet>

A monomer mixture containing 100 parts by mass of butyl acrylate, 0.01 parts by mass of 2-hydoxyethyl acrylate and 5 parts of acrylic acid were placed in a reaction vessel equipped with a cooling pipe, a nitrogen inlet pipe, a thermometer and a stirring apparatus. 2,2'-Azobisisobutyronitrile as a polymerization initiator in an amount of 0.1 part by mass per 100 parts by mass of the monomer mixture was placed in the reaction vessel together with 100 parts by mass of ethyl acetate, and nitrogen gas was introduced while gently stirring to perform nitrogen substitution. Liquid temperature in the reaction vessel was maintained in the vicinity of 55°C and a polymerization reaction was conducted for 8 hours. Thus, an acrylic polymer solution (solid content concentration 30 wt%) having a weight average molecular weight (Mw): 1,800,000 and Mw/Mn=4.1 was prepared.

0.3 Parts by mass of benzoyl peroxide (NYPER BMT manufactured by NOF Corporation), 1 part by mass of an isocyanate crosslinking agent (CORONATE L manufactured by Tosoh Corporation) and 0.25 parts by mass of a tetraazaporphyrin dye (PD-320, having maximum absorption wavelength at wavelength of 595 nm, manufactured by Yamamoto Chemicals Inc.) were added to 100 parts by mass of the solid content of the acrylic polymer solution obtained, and a colored adhesive composition was obtained. The colored adhesive composition obtained was dried at 130°C for 2 minutes, and a colored adhesive sheet having a thickness of 25 µm was obtained.

### <Production of metallic luster film>

### (Example 1)

The colored adhesive sheet obtained above was applied to the metal layer side-surface of the laminate obtained above by a hand roller to form an adhesive layer. Thus, a metallic luster film of Example 1 having colored metallic luster was obtained.

### (Example 2)

Metallic luster film of Example 2 was obtained in the same manner as in Example 1, except for using a colored adhesive sheet obtained as follows.

A monomer mixture containing 100 parts by mass of butyl acrylate, 0.01 parts by mass of 2-hydoxyethyl acrylate and 5 parts of acrylic acid were placed in a reaction vessel equipped with a cooling pipe, a nitrogen inlet pipe, a thermometer and a stirring apparatus. 2,2'-Azobisisobytyronitrile as a polymerization initiator in an amount of 0.1 parts by mass per 100 parts by mass of the monomer mixture was placed in the reaction vessel together with 100 parts by mass of ethyl acetate, and nitrogen gas was introduced while gently stirring to perform nitrogen substitution. Liquid temperature in the reaction vessel was maintained in the vicinity of 55°C and a polymerization reaction was conducted for 8 hours. Thus, an acrylic polymer solution (solid content concentration 30 wt%) having a weight average molecular weight (Mw): 1,800,000 and Mw/Mn=4.1 was prepared.

0.3 Parts by mass of benzoyl peroxide (NYPER BMT manufactured by NOF Corporation), 1 part by mass of an isocyanate crosslinking agent (CORONATE L manufactured by Tosoh Corporation), AJISPER PB821 manufactured by Ajinomoto Fine-Techno Co., Inc. as a dispersant and 0.05 parts by mass of Pigment Blue 15 (manufactured by Tokyo Chemical Industry Co., Ltd.) as a pigment were added to 100 parts by mass of the solid content of the acrylic polymer solution obtained, and a colored adhesive composition was obtained. The colored adhesive composition obtained was dried at 130°C for 2 minutes, and a colored adhesive sheet having a thickness of 25 µm was obtained.

### (Example 3)

Metallic luster film of Example 3 was prepared in the same manner as in Example 2, except that the amount of Pigment Blue 15 added was changed to 0.1 parts by mass.

### (Example 4)

Metallic luster film of Example 4 was prepared in the same manner as in Example 2, except that the amount of Pigment Blue 15 added was changed to 0.5 parts by mass.

### (Example 5)

Metallic luster film of Example 5 was prepared in the same manner as in Example 2, except that the amount of Pigment Blue 15 added was changed to 1.0 part by mass.

### (Example 6)

Metallic luster film of Example 6 was prepared in the same manner as in Example 2, except that the amount of Pigment Blue 15 added was changed to 2.5 parts by mass.

### (Example 7)

Metallic luster film of Example 7 was prepared in the same manner as in Example 2, except that Pigment Yellow 74 (Dalamar Yellow manufactured by Oakwood Products, Inc.) was added as a pigment in an amount of 0.05 parts by mass in place of Pigment Blue 15.

### (Example 8)

Metallic luster film of Example 8 was prepared in the same manner as in Example 7, except that the amount of Pigment Yellow 74 added was changed to 0.1 parts by mass.

### (Example 9)

Metallic luster film of Example 9 was prepared in the same manner as in Example 7, except that the amount of Pigment Yellow 74 added was changed to 0.5 parts by mass.

### (Example 10)

Metallic luster film of Example 10 was prepared in the same manner as in Example 7, except that the amount of Pigment Yellow 74 added was changed to 1.0 part by mass.

### (Example 11)

Metallic luster film of Example 11 was prepared in the same manner as in Example 7, except that the amount of Pigment Yellow 74 added was changed to 2.5 parts by mass.

### <Measurement of visible light transmittance of colored adhesive sheet>

Spectrophotometer U4100 manufactured by Hitachi High-Technologies was used. The colored adhesive sheet obtained was adhered to a blue glass sheet having a thickness of 1.2 mm, total light transmittance at 380 to 780 nm was measured with 5 nm pitch, and the maximum value of the transmittance, the average value of 5 nm pitch and the minimum value were obtained. The results are shown in Table 1.

**[Table 1]**

| | Coloring matter/pigment | | Dispersant | Visible light transmittance (%) | | |
|---|---|---|---|---|---|---|
| | Material | Concentration (parts by mass) | Material | Maximum | Average | Minimum |
| Ex. 1 | PD-320 | 0.25 | - | 91 | 80 | 10 |
| Ex. 2 | Pigment Blue 15 | 0.05 | AJISPER PB821 | 87 | 77 | 65 |
| Ex. 3 | Pigment Blue 15 | 0.1 | AJISPER PB821 | 86 | 69 | 51 |
| Ex. 4 | Pigment Blue 15 | 0.5 | AJISPER PB821 | 82 | 39 | 8 |
| Ex. 5 | Pigment Blue 15 | 1 | AJISPER PB821 | 77 | 28 | 2 |
| Ex. 6 | Pigment Blue 15 | 2.5 | AJISPER PB821 | 63 | 16 | 0 |
| Ex. 7 | Pigment Yellow 74 | 0.05 | AJISPER PB821 | 83 | 83 | 64 |
| Ex. 8 | Pigment Yellow 74 | 0.1 | AJISPER PB821 | 80 | 80 | 49 |
| Ex. 9 | Pigment Yellow 74 | 0.5 | AJISPER PB821 | 68 | 68 | 3 |
| Ex. 10 | Pigment Yellow 74 | 1 | AJISPER PB821 | 64 | 64 | 2 |
| Ex. 11 | Pigment Yellow 74 | 2.5 | AJISPER PB821 | 57 | 57 | 0 |

### <Measurement of sheet resistance>

Sheet resistance of the metallic luster film of Example 1 was measured by an eddy current measurement method according to JIS Z2316-1: 2014 using a non-contact type resistance measurement instrument NC-80MAP manufactured by Napson Corporation. As a result, the sheet resistance was 4830 Ω/square.

### <Measurement of radio wave transmission attenuation>

Radio wave transmission attenuation at 1 GHz of the metallic luster film of Example 1 was evaluated using KEC method measurement evaluation jig and a spectrum analyzer CXA signal Analyzer NA9000A manufactured by Agilent Technologies. As a result, the transmission attenuation was 0.02 [-dB].

### <Measurement of visible light reflectance>

Regular reflectance at a measurement wavelength of 550 µm of the metallic luster film of Example 1 was measured using a spectrophotometer U4100 manufactured by Hitachi High-Technologies. As a result, the regular reflectance was 55%. Reflectance of Al-deposited mirror was considered to be reflectance 100% as a reference.

As described above, the metallic luster films of the examples had sufficiently high sheet resistance value and showed good results of radio wave transmission attenuation. Therefore, the metallic luster films had excellent electromagnetic wave transmitting property. Furthermore, the metallic luster films of the examples have excellent visible light reflectance and therefore have metallic luster of high-quality feeling.

### REFERENCE SIGNS LIST

1: Metallic luster film
10: Substrate film
11: Metal layer
11a: Metal part
11b: Gap
12: Adhesive layer
2: Adherend
2a: Surface of visually recognized side (outside)
2b: Surface (inside) opposite visually recognized surface (outside)

## Claims

1. An electromagnetic wave transmissive metallic luster film comprising a substrate film, a metal layer formed on one surface of the substrate film, an indium oxide containing layer between the substrate film and the metal layer, and an adhesive layer formed on the metal layer, wherein the metal layer is a discontinuous layer comprising a metal, and the adhesive layer is a layer comprising a transparent adhesive, and wherein the indium oxide containing layer is provided in a continuous state.

2. The electromagnetic wave transmissive metallic luster film according to claim 1, wherein the transparent adhesive is colored.

3. The electromagnetic wave transmissive metallic luster film according to claim 1 or claim 2, wherein the metal layer has an island structure.

4. The electromagnetic wave transmissive metallic luster film according to any one of claims 1 to 3, wherein the metal layer comprises aluminum or an aluminum alloy.

5. The electromagnetic wave transmissive metallic luster film according to claim 4, wherein the aluminum alloy contains aluminum in an amount of 50 wt% or more.

6. The electromagnetic wave transmissive metallic luster film according to any one of claims 1 to 5, which comprises a light-shielding layer formed on a surface of the substrate film that is opposite the surface thereof on which the metal layer is formed, and wherein the light-shielding layer is formed of a material selected from a homopolymer or a copolymer such as polyethylene terephthalate, polyethylene naphthalate, polybutylene terephthalate, polyamide, polyvinyl chloride, polycarbonate, cycloolefin polymer, polystyrene, polypropylene, polyethylene, polycycloolefin, polyurethane, poly(methyl methacrylate) and acrylonitrile butadiene styrene, and is coloured black.

7. The electromagnetic wave transmissive metallic luster film according to any one of claims 1 to 5, wherein the substrate film has light-shielding property, and is formed of a material selected from a homopolymer or a copolymer such as polyethylene terephthalate, polyethylene naphthalate, polybutylene terephthalate, polyamide, polyvinyl chloride, polycarbonate, cycloolefin polymer, polystyrene, polypropylene, polyethylene, polycycloolefin, polyurethane, poly(methyl methacrylate) and acrylonitrile butadiene styrene.

8. Use of the electromagnetic wave transmissive metallic luster film according to any one of claims 1 to 7, by adhering, via the adhesive layer, to a surface of a transparent member that is opposite a visually recognised surface thereof.

9. A casing comprising a transparent casing substrate and the electromagnetic wave transmissive metallic luster film of according to any one of claims 1 to 7, wherein the electromagnetic wave transmissive metallic luster film is adhered, via the adhesive layer, to a surface of the transparent casing substrate that is opposite a visually recognized surface thereof.

10. An electronic device comprising the casing according to claim 9.

## Patentansprüche

1. Elektromagnetische Wellen durchlassende metallische Glanzfolie, umfassend eine Substratfolie, eine auf einer Oberfläche der Substratfolie ausgebildete Metallschicht, eine Indiumoxid enthaltende Schicht zwischen der Substratfolie und der Metallschicht und eine auf der Metallschicht ausgebildete Klebeschicht, wobei die Metallschicht eine diskontinuierliche Schicht ist, die ein Metall umfasst, und die Klebeschicht eine Schicht ist, die einen transparenten Klebstoff umfasst, und wobei die Indiumoxid enthaltende Schicht in einem kontinuierlichen Zustand vorliegt.

2. Elektromagnetische Wellen durchlassende metallische Glanzfolie gemäß Anspruch 1, wobei der transparente Klebstoff gefärbt ist.

3. Elektromagnetische Wellen durchlassende metallische Glanzfolie gemäß Anspruch 1 oder Anspruch 2, wobei die Metallschicht eine Inselstruktur aufweist.

4. Elektromagnetische Wellen durchlassende metallische Glanzfolie gemäß einem der Ansprüche 1 bis 3, wobei die Metallschicht Aluminium oder eine Aluminiumlegierung umfasst.

5. Elektromagnetische Wellen durchlassende metallische Glanzfolie gemäß Anspruch 4, wobei die Aluminiumlegierung Aluminium in einer Menge von 50 Gew.-% oder mehr enthält.

6. Elektromagnetische Wellen durchlassende metallische Glanzfolie gemäß einem der Ansprüche 1 bis 5, die eine Licht abschirmende Schicht umfasst, die auf einer Oberfläche der Substratfolie ausgebildet ist, die derjenigen Oberfläche gegenüberliegt, auf der die Metallschicht ausgebildet ist, und wobei die Licht abschirmende Schicht aus einem Material gebildet ist, das aus einem Homopolymer oder einem Copolymer wie Polyethylenterephthalat, Polyethylennaphthalat, Polybutylenterephthalat, Polyamid, Polyvinylchlorid, Polycarbonat, Cycloolefinpolymer, Polystyrol, Polypropylen, Polyethylen, Polycycloolefin, Polyurethan, Poly(methylmethacrylat) und Acrylnitril-Butadien-Styrol ausgewählt ist, und schwarz gefärbt ist.

7. Elektromagnetische Wellen durchlassende metallische Glanzfolie gemäß einem der Ansprüche 1 bis 5, wobei die Substratfolie Licht abschirmende Eigenschaften aufweist und aus einem Material gebildet ist, das aus einem Homopolymer oder einem Copolymer wie Polyethylenterephthalat, Polyethylennaphthalat, Polybutylenterephthalat, Polyamid, Polyvinylchlorid, Polycarbonat, Cycloolefinpolymer, Polystyrol, Polypropylen, Polyethylen, Polycycloolefin, Polyurethan, Poly(methylmethacrylat) und Acrylnitril-Butadien-Styrol ausgewählt ist.

8. Verwendung der elektromagnetische Wellen durchlassenden metallischen Glanzfolie gemäß einem der Ansprüche 1 bis 7 durch Anhaften über die Klebeschicht an eine Oberfläche eines transparenten Elements, die einer visuell erkennbaren Oberfläche davon gegenüberliegt.

9. Gehäuse, umfassend ein transparentes Gehäusesubstrat und die elektromagnetische Wellen durchlassende metallische Glanzfolie gemäß einem der Ansprüche 1 bis 7, wobei die elektromagnetische Wellen durchlassende metallische Glanzfolie über die Klebeschicht an einer Oberfläche des transparenten Gehäusesubstrats, die einer visuell erkennbaren Oberfläche davon gegenüberliegt, anhaftet.

10. Elektronische Vorrichtung, umfassend das Gehäuse gemäß Anspruch 9.

## Revendications

1. Film à lustre métallique laissant passer les ondes électromagnétiques comprenant un film de substrat, une couche métallique formée sur une surface du film de substrat, une couche contenant de l'oxyde d'indium entre le film de substrat et la couche métallique, et une couche adhésive formée sur la couche métallique, dans lequel la couche métallique est une couche discontinue comprenant un métal, et la couche adhésive est une couche comprenant un adhésif transparent, et dans lequel la couche contenant de l'oxyde d'indium est fournie dans un état continu.

2. Film à lustre métallique laissant passer les ondes électromagnétiques selon la revendication 1, dans lequel l'adhésif transparent est coloré.

3. Film à lustre métallique laissant passer les ondes électromagnétiques selon la revendication 1 ou la revendication 2, dans lequel la couche métallique a une structure en îlots.

4. Film à lustre métallique laissant passer les ondes électromagnétiques selon l'une quelconque des revendications 1 à 3, dans lequel la couche métallique comprend de l'aluminium ou un alliage d'aluminium.

5. Film à lustre métallique laissant passer les ondes électromagnétiques selon la revendication 4, dans lequel l'alliage d'aluminium contient de l'aluminium en une quantité de 50 % en poids ou plus.

6. Film à lustre métallique laissant passer les ondes électromagnétiques selon l'une quelconque des revendications 1 à 5, qui comprend une couche masquant la lumière formée sur une surface du film de substrat qui est opposée à la surface de celle-ci sur laquelle la couche métallique est formée, et dans lequel la couche masquant la lumière est formée d'un matériau sélectionné parmi un homopolymère ou copolymère tel que le téréphtalate de polyéthylène, le naphtalate de polyéthylène, le téréphtalate de polybutylène, le polyamide, le chlorure de polyvinyle, le polycarbonate, le polymère de cyclooléfine, le polystyrène, le polypropylène, le polyéthylène, la polycyclooléfine, le polyuréthane, le poly(méthacrylate de méthyle) et l'acrylonitrile-butadiène-styrène, et est colorée noire.

7. Film à lustre métallique laissant passer les ondes électromagnétiques selon l'une quelconque des revendications 1 à 5, dans lequel le film de substrat a une propriété masquant la lumière et est formé d'un matériau sélectionné parmi un homopolymère ou copolymère tel que le téréphtalate de polyéthylène, le naphtalate de polyéthylène, le téréphtalate de polybutylène, le polyamide, le chlorure de polyvinyle, le polycarbonate, le polymère de cyclooléfine, le polystyrène, le polypropylène, le polyéthylène, la polycyclooléfine, le polyuréthane, le poly(méthacrylate de méthyle) et l'acrylonitrile-butadiène-styrène.

8. Utilisation du film à lustre métallique laissant passer les ondes électromagnétiques selon l'une quelconque des revendications 1 à 7, en le collant, via la surface adhésive, à une surface d'un élément transparent qui est à l'opposé d'une surface visuellement reconnue de celui-ci.

9. Etui comprenant un substrat d'étui transparent et le film à lustre métallique laissant passer les ondes électromagnétiques selon l'une quelconque des revendications 1 à 7, dans lequel le film à lustre métallique laissant passer les ondes électromagnétiques est collé, via la couche adhésive, à une surface du substrat d'étui transparent qui est à l'opposée d'une surface visuellement reconnue de celui-ci.

10. Dispositif électronique comprenant l'étui selon la revendication 9.
